# EUROPÄISCHE PATENTSCHRIFT

(11) **EP 1 413 122 B1**
(45) Veröffentlichungstag und Bekanntmachung des Hinweises auf die Patenterteilung: **23.03.2005**
(21) Anmeldenummer: 02754265.3
(22) Anmeldetag: 25.06.2002
(51) Int. Cl.: H04M 1/04, H02J 7/00

(54) **AUFNAHMEVORRICHTUNG FÜR EIN MOBILES ELEKTRONISCHES ENDGERÄT**
HOLDING DEVICE FOR A MOBILE ELECTRONIC TERMINAL
DISPOSITIF RECEPTEUR D'UN TERMINAL ELECTRONIQUE MOBILE

(30) Priorität: 27.07.2001 DE 10136659
(43) Veröffentlichungstag der Anmeldung: 28.04.2004
(73) Patentinhaber: SIEMENS AKTIENGESELLSCHAFT, 80333 München (DE)
(72) Erfinder: HEISS, Reinhold, 85232 Deutenhausen (DE); KIESEWETTER, Reinhold, 85375 Neufahrn (DE); UNGERING, Ansgar, 81549 München (DE)
(86) Internationale Anmeldenummer: PCT/DE2002/002313
(87) Internationale Veröffentlichungsnummer: WO 2003/013110

(56) Entgegenhaltungen:
- WO-A-98/09415
- DE-U- 29 918 357
- GB-A- 2 317 530
- US-A- 5 822 427
- PATENT ABSTRACTS OF JAPAN vol. 2000, no. 13, 5. Februar 2001 (2001-02-05) & JP 2000 277171 A (SANYO ELECTRIC CO LTD), 6. Oktober 2000 (2000-10-06)

## Beschreibung

Die vorliegende Erfindung betrifft eine Aufnahmevorrichtung für ein mobiles elektronisches Endgerät, insbesondere für ein Kommunikations-Endgerät.

Es sind Aufnahmevorrichtungen für mobile elektronische Endgeräte, insbesondere Kommunikations-Endgeräte, wie beispielsweise Mobilfunk-Endgeräte, PDAs oder dergleichen, bekannt, in welche die elektronischen Endgeräte einsteckbar und in einer vorbestimmten "Parkposition" abstellbar sind. Derartige Aufnahmevorrichtungen können als Tischablage oder Wandablage ausgebildet sein und halten das jeweilige Endgerät in einer gut sichtbaren, statisch stabilen Stellung. In der Regel sind derartige Aufnahmevorrichtungen als Ladestation und gegebenenfalls zusätzlich als Schnittstelle zu einer externen Datenverarbeitungsanlage ausgebildet, so daß bei Positionierung eines mobilen elektronischen Endgeräts in einer derartigen Aufnahmevorrichtung dessen elektrischer Energiespeicher (Akku) aufgeladen werden kann oder/und Daten zwischen dem mobilen elektronischen Endgerät und der externen Datenverarbeitungsanlage ausgetauscht werden können.

Herkömmliche Aufnahmevorrichtungen nach dem Stand der Technik sind jedoch für diese Zwecke verhältnismäßig aufwendig ausgeführt. Sie weisen einen elektrischen Verbinder auf, welcher mit einem korrespondierenden Anschluß des mobilen elektronischen Endgeräts beim Einstecken des Endgeräts koppelbar ist. Der elektrische Verbinder ist in der Aufnahmevorrichtung mit einer auf einer Leiterplatte realisierten Schaltung gekoppelt, welche wiederum mit einer weiteren Anschlußeinheit elektrisch verbunden ist, an welche dann ein Schnittstellenkabel des Zusatzgeräts, beispielsweise des Ladegeräts oder der anzuschließenden elektronischen Datenverarbeitungsanlage anschließbar ist. Derartige herkömmliche Aufnahmevorrichtungen sind aufgrund des aufwendigen Aufbaus verhältnismäßig kostenintensiv in ihrer Herstellung, und sperrig in ihren äußeren Abmessungen.

Dokument GB-A-2317530 beschreibt eine Aufnahmevorrichtung für ein Mobiltelefon wobei in dem Aufnahmebereich eine Verbinderöffnung vorgesehen ist, in welcher ein elektrischer Steckverbinder für das Mobiltelefon positioniert ist.

Es ist daher eine Aufgabe der vorliegenden Erfindung, eine Aufnahmevorrichtung der eingangs bezeichneten Art bereitzustellen, welche bei einfachem Aufbau und hoher Funktionalität kostengünstig herzustellen ist.

Diese Aufgabe wird durch eine Aufnahmevorrichtung für ein mobiles elektronisches Endgerät, insbesondere für ein Kommunikations-Endgerät, gelöst, umfassend einen Aufnahmebereich, in welchem das mobile elektronische Endgerät in einer vorbestimmten Aufnahmestellung aufnehmbar ist, wobei in dem Aufnahmebereich eine Verbinderöffnung vorgesehen ist, in welcher ein elektrischer Verbinder eines Zusatzgeräts für das mobile elektronische Endgerät positioniert ist, und wobei bei Aufnahme eines mobilen elektronischen Endgeräts im Aufnahmebereich der Aufnahmevorrichtung der Verbinder mit einem korrespondierenden Anschluß des mobilen elektronischen Endgeräts koppelbar oder gekoppelt ist. Durch Positionierung des elektrischen Verbinders des Zusatzgeräts in der Verbinderöffnung des Aufnahmebereichs ist es möglich, die Aufnahmevorrichtung passiv auszubilden, d.h. ohne eigene elektronische Komponenten. Stattdessen wird einfach der ohnehin vorhandene Verbinder des Zusatzgeräts, welcher auch ohne Aufnahmevorrichtung unmittelbar an das mobile elektronische Endgerät anschließbar ist, mit dessen Anschluß gekoppelt. Die Aufnahmevorrichtung erfüllt demzufolge lediglich die Aufgabe des statischen Haltens des in ihrem Aufnahmebereich positionierten mobilen elektronischen Endgeräts. Aufgrund des möglichen Verzichts auf elektronische Komponenten bei der Herstellung der erfindungsgemäßen Aufnahmevorrichtung kann diese einfach aufgebaut und kostengünstig hergestellt werden.

In einer Weiterbildung der Erfindung kann vorgesehen sein, daß der Aufnahmebereich auf die Abmessungen des mobilen elektronischen Endgeräts abgestimmt ist. Durch diese Maßnahme ist es möglich, eine vorbestimmte Positionierung des mobilen elektronischen Endgeräts zu gewährleisten. Gleichermaßen ist es jedoch auch möglich, den Aufnahmebereich derart auszugestalten, daß verschiedenartige Endgeräte mit unterschiedlichen Abmessungen sicher in der Aufnahmevorrichtung gehalten werden können.

Ferner kann erfindungsgemäß vorgesehen sein, daß die Verbinderöffnung einer Verbinderkammer zugeordnet ist, in welcher der elektrische Verbinder des Zusatzgeräts zumindest teilweise anordenbar ist. Die Bereitstellung einer Verbinderkammer innerhalb der erfindungsgemäßen Aufnahmevorrichtung gewährleistet eine einfach handzuhabende Unterbringung des elektrischen Verbinders des Zusatzgeräts an der Aufnahmevorrichtung und verhindert eine fehlerhafte Positionierung des elektrischen Verbinders in der Aufnahmevorrichtung. Dies kann beispielsweise dadurch unterstützt werden, daß in der Verbinderkammer Haltemittel, insbesondere wenigstens eine Halteklammer, zum Fixieren des elektronischen Verbinders vorgesehen sind. Stellt man sich vor, daß es sich bei dem Verbinder des Zusatzgeräts um einen mehrpoligen Stecker handelt, welcher über ein Verbindungskabel mit dem Zusatzgerät elektrisch verbunden ist, so ist es möglich, den Stecker, beziehungsweise den in den Stecker einmündenden Kabelbereich, über die Haltemittel, insbesondere die Halteklammer, in der Verbinderkammer zu fixieren und somit eine vorbestimmte Positionierung des Verbinders in der Verbinderkammer zu gewährleisten.

Obgleich - gemäß vorstehender Beschreibung - der Aufnahmebereich der Aufnahmevorrichtung zur Gewährleistung einer sicheren und statisch definierten Aufnahme des mobilen elektronischen Endgeräts auf die Abmessungen desselben abgestimmt ist, ist in der Regel ein gewisses Spiel vorhanden, um das mobile elektronische Endgerät problemlos in die Aufnahmevorrichtung einstecken zu können. Dieses Spiel kann jedoch zu Schwierigkeiten bei der Kopplung des Verbinders mit dem korrespondierenden Anschluß des mobilen elektronischen Endgeräts führen, insbesondere dann, wenn Verbinder und Anschluß nicht zueinander fluchten. Um Letzteres auszuschließen, kann in einer Weiterbildung der Erfindung eine schwimmende Lagerung des Verbinders innerhalb der Verbinderöffnung vorgesehen sein. Dies kann dadurch erreicht werden, daß die Verbinderöffnung größer dimensioniert ist als der Verbinder und daß die Haltemittel, insbesondere die wenigstens eine Halteklammer, eine Bewegung des elektrischen Verbinders in der Verbinderöffnung zulassen. Somit ist es möglich, daß sich der Verbinder innerhalb der Verbinderöffnung je nach gegenwärtiger Lage des eingeführten elektronischen Endgeräts schwimmend verlagert und dadurch eine einfache Kopplung von Verbinder und korrespondierendem Anschluß des mobilen elektronischen Endgeräts gewährleistet ist.

Um das optische Erscheinungsbild der erfindungsgemäßen Aufnahmevorrichtung weiter zu verbessern, kann vorgesehen sein, daß die Verbinderkammer mit einem Deckel wenigstens teilweise verschließbar ist. Diese Maßnahme verhindert darüber hinaus ein unbeabsichtigtes Entfernen des Verbinders aus der Aufnahmevorrichtung aufgrund mechanischer Einflüsse, wie beispielsweise eine Zugbelastung an dem in die Aufnahmevorrichtung einmündenden Kabel des Zusatzgeräts. Bei der Ausbildung der Verbinderkammer mit einem Deckel kann vorgesehen sein, daß der Deckel über ein Gelenk, vorzugsweise ein Schwenkgelenk, an der Aufnahmevorrichtung angebracht ist. Die Handhabbarkeit des verschließbaren Deckels wird ferner dadurch erhöht, daß der Deckel an der Aufnahmevorrichtung in einer Verschlußstellung festlegbar, vorzugsweise verrastbar ist.

Bei Aufnahmevorrichtungen ist es bekanntlich erwünscht, das aufgenommene mobile elektronische Endgerät in einer vorbestimmten Parkstellung stabil zu lagern. Um dies auch mit der erfindungsgemäßen Aufnahmevorrichtung besser erreichen zu können, kann in einer Weiterbildung der Erfindung vorgesehen sein, daß wenigstens ein Stützelement zum Stabilisieren der Aufnahmevorrichtung aus einer Transportstellung in eine Stützstellung verlagerbar, vorzugsweise ausklappbar, ist. Man stelle sich vor, daß das Stützelement beispielsweise in Form zweier Beine ausgebildet ist, welche separat oder als Einheit aus der Transportstellung in die Stützstellung ausklappbar sind. In der Transportstellung liegen die Beine eng an einem den Aufnahmebereich aufweisenden Teil der Aufnahmevorrichtung an, so daß sich die gesamte Aufnahmevorrichtung in einem kompakten kleinvolumigen Zustand befindet. Verlagert man die Beine hingegen in die Stützstellung, so bilden der den Aufnahmebereich der Aufnahmevorrichtung aufweisende Teil und die Beine mehrere Auflagepunkte, welche eine statisch stabile Positionierung der Aufnahmevorrichtung beispielsweise auf einer Tischoberfläche ermöglichen.

Darüber hinaus kann erfindungsgemäß vorgesehen sein, daß die Aufnahmevorrichtung eine Aufhängeöffnung zum Aufnehmen eines Aufhängemittels aufweist. Durch dieses konstruktive Merkmal ist es möglich, die Aufnahmevorrichtung beispielsweise mittels eines Nagels oder einer Schraube an einer Wand aufzuhängen.

Die Erfindung betrifft ferner ein Set, umfassend eine Aufnahmevorrichtung der vorstehend beschriebenen Art sowie ein Zusatzgerät, wobei das Zusatzgerät ein Kabel und einen endseitig an dem Kabel angeordneten elektrischen Verbinder umfaßt, welcher in der Verbinderöffnung der Aufnahmevorrichtung positionierbar ist. Bei dem Zusatzgerät kann es sich beispielsweise um ein Ladegerät, ein Schnittstellenkabel einer externen elektronischen Vorrichtung oder dergleichen handeln.

Die Erfindung wird im folgenden anhand der beiliegenden Figuren beispielhaft erläutert.

Es stellen dar:
- Fig. 1: eine perspektivische Ansicht einer erfindungsgemäßen Aufnahmevorrichtung;
- Fig. 2: eine perspektivische Rückansicht der erfindungsgemäßen Aufnahmevorrichtung;
- Fig. 3: die Ansicht entsprechend Figur 2 mit eingelegtem Verbinder eines Zusatzgeräts;
- Fig. 4: eine perspektivische Ansicht der erfindungsgemäßen Aufnahmevorrichtung entsprechend Figur 1, jedoch aus einem anderen Blickwinkel.

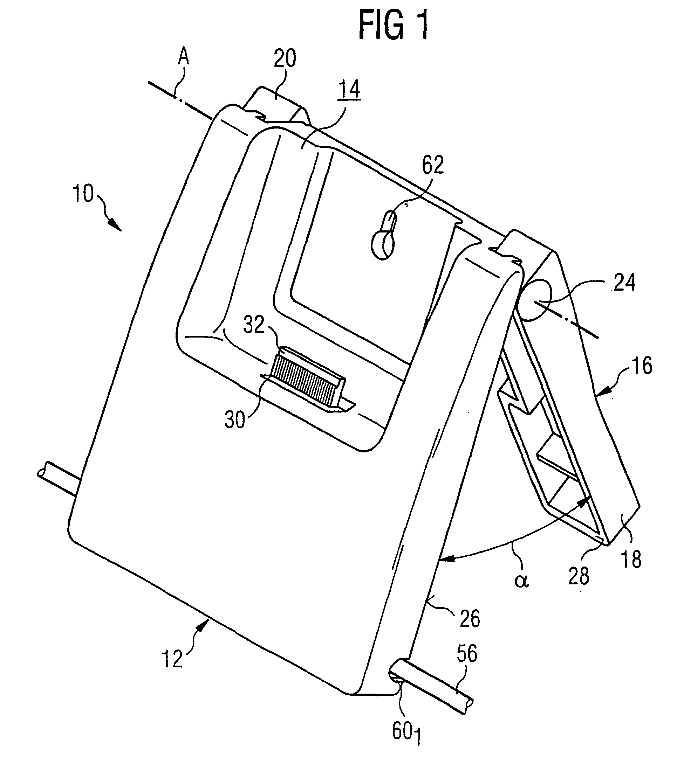

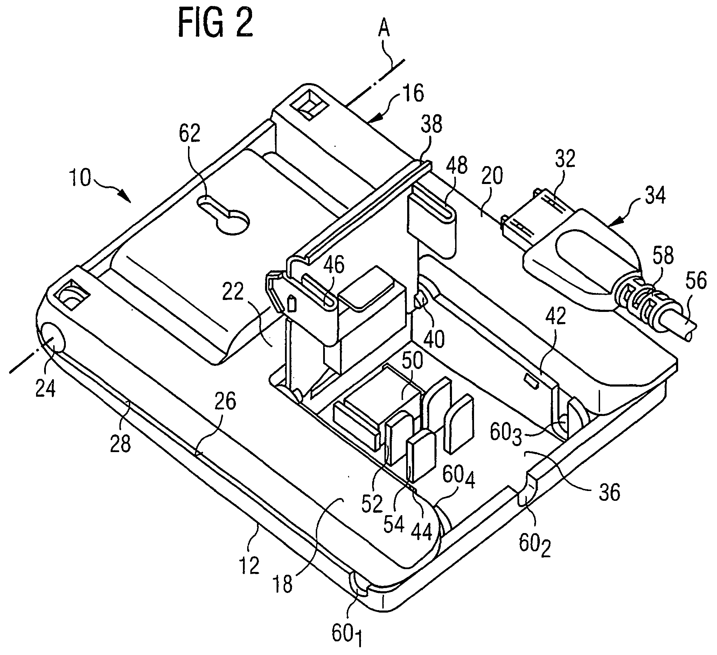

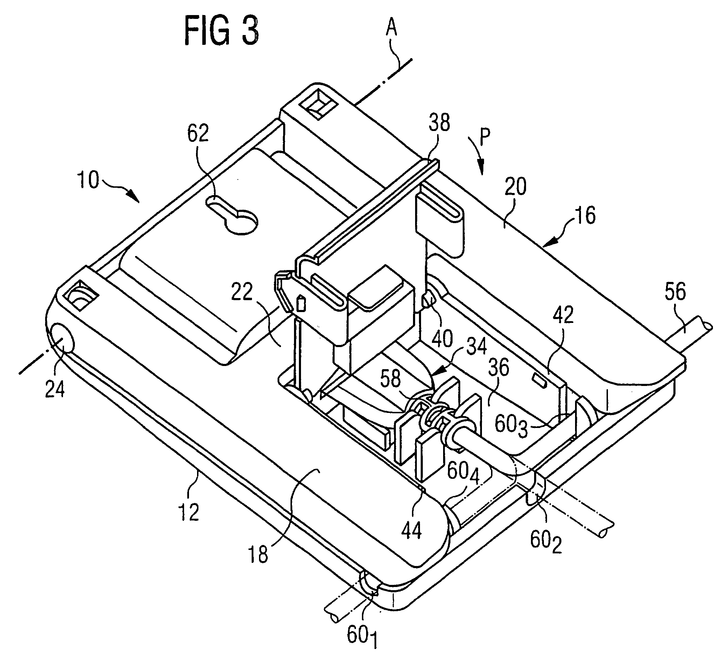

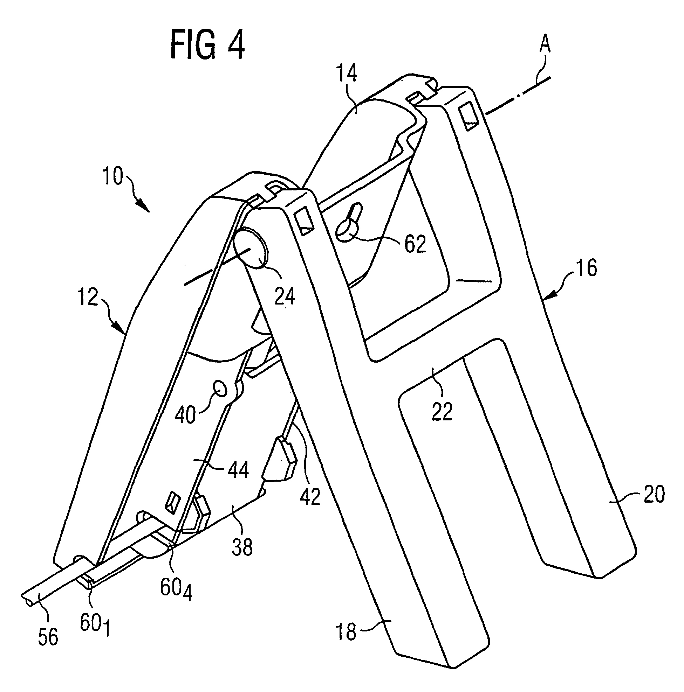

In Figur 1 ist eine erfindungsgemäße Aufnahmevorrichtung allgemein mit (10) bezeichnet. Diese umfaßt einen Hauptkörper (12), in welchem ein im wesentlichen rechteckförmiger Aufnahmebereich (14) ausgebildet ist. An dem Hauptkörper (12) ist ein H-förmiges Stützelement (16) angebracht. Das Stützelement (16) umfaßt zwei Längsschenkel (18, 20), welche über einen Querschenkel (22) miteinander verbunden sind. Das H-förmige Stützelement ist an den in Figur 1 oberen Enden der Längsschenkel (18, 20) um eine Schwenkachse A schwenkbar an dem Hauptkörper (12) der Aufnahmevorrichtung (10) gelagert. Zur Realisierung dieser Lagerung greifen Bolzen (24) (nur einer gezeigt) sowohl an dem in Figur 1 oberen Ende der Längsschenkel (18, 20) als auch an korrespondierenden Stellen des Hauptkörpers (12) an. Dadurch läßt sich das Stützelement (16) relativ zu dem Hauptkörper (12) aus einer in Figuren 2 und 3 dargestellten Transportstellung, in welcher einander zugewandte Kanten (26, 28) von Hauptkörper (12) und Stützelement (16) im wesentlichen zueinander parallel verlaufen, um einen Winkel α (siehe Figur 1) in eine Stützstellung verschwenken. In der Transportstellung weist die erfindungsgemäße Aufnahmevorrichtung (10) eine kompakte Form auf, in welcher sie kleinvolumig zu transportieren ist. In der in Figuren 1 und 4 gezeigten Stützstellung bietet die erfindungsgemäße Aufnahmevorrichtung (10) hingegen einen statisch stabilen Stand, wobei in dem Aufnahmebereich (14) das mobile elektronische Endgerät positionierbar ist.

Betrachtet man nun den Aufnahmebereich (14), so erkennt man, daß dieser an seiner Unterseite eine Verbinderöffnung (30) aufweist, durch welche eine Kontaktleiste (32) eines elektrischen Verbinders (34) (siehe Figuren 2 und 3) hindurch ragt.

Zur Positionierung des elektrischen Verbinders (34) in der Aufnahmevorrichtung (10) wird im folgenden auf Figuren 2 bis 3 verwiesen. Figur 2 zeigt in der Rückansicht der erfindungsgemäßen Aufnahmevorrichtung, daß diese eine Verbinderkammer (36) aufweist, welche mit einem Deckel (38) verschließbar ist. Der Deckel (38) ist über ein Schwenkgelenk (40) schwenkbar an Begrenzungswänden (42, 44) gelagert und weist elastische Rastzungen (46, 48) auf, welche in herkömmlicher Weise über korrespondierende Rastnasen an den Begrenzungswänden (42, 44) verrastbar sind.

Im Inneren der Verbinderkammer (36) ist ein Positionierungsvorsprung (50) vorgesehen, welcher als Auflage für den Verbinder (34) dient. Unterhalb des Positionierungsvorsprungs (50) sind zwei voneinander beabstandete Halteklammern (52, 54) vorgesehen, in welche ein von dem Verbinder (34) ausgehendes Kabel (56) einlegbar ist und durch Reibschluß gehalten werden kann.

Zur Erreichung des in Figur 1 gezeigten Betriebszustands der erfindungsgemäßen Aufnahmevorrichtung wird zunächst der Dekkel (38) zum Öffnen der Verbinderkammer (36) in die in Figur 2 dargestellte Stellung aufgeschwenkt. Im Anschluß wird der Stecker (34), wie in Figur 3 gezeigt, auf dem Positionierungsvorsprung (50) positioniert, wobei er mit seiner Kontaktleiste (34) durch die Verbinderöffnung (30) hindurch geschoben wird. Während der Positionierung des Verbinders (34) auf dem Positionierungsvorsprung wird der verbindernahe Teil des Kabels (56), welcher in den Figuren 2 und 3 mit einer Kunststoffarmierung (58) versehen ist, in die Klammern (52 und 54) eingedrückt, so daß der Verbinder sowie dessen Kabel (56) fest in der Verbinderkammer gehalten werden. Ferner wird das Kabel (56) durch eine der vorgesehenen Kabelaustrittsöffnungen (60₁, 60₂, 60₃) eingelegt. Daraufhin wird der Deckel (38) entsprechend Pfeil P aus Figur 3 um das Schwenkgelenk (40) zurückverschwenkt und verrastet, so daß er, wie in Figur 4 dargestellt, die Verbinderkammer (36) verschließt. In diesem Zustand ist nun der Verbinder (34) in der gewünschten vorbestimmten Lage innerhalb der Verbinderkammer (36) positioniert und durch die Halteklammern (52, 54) sowie den Positionierungsvorsprung (50) festgelegt, so daß die Kontaktleiste (32) aus der Verbinderöffnung (30) in den Aufnahmebereich (14) (siehe Figur 1) vorsteht.

Setzt man nun ein mobiles elektronisches Endgerät, beispielsweise ein Mobiltelefon, in den Aufnahmebereich (14) ein, so ist es möglich, die Kontaktleiste (32) des Verbinders (34) in eine korrespondierende Anschlußbuchse (nicht gezeigt) des Endgeräts einzuführen und damit einen elektrischen Kontakt herzustellen. Das elektronische Endgerät kann nun aufgeladen werden, oder es kann ein Datenaustausch über die Kontakte der Kontaktleiste (32) stattfinden.

Es sei darauf hingewiesen, daß die Abmessungen der Kontaktleiste (32) kleiner sind als die Dimensionierung der Durchtrittsöffnung (30), so daß sich die Kontaktleiste (32) innerhalb der Verbinderöffnung (30) geringfügig bewegen läßt. Dies ist auch deshalb möglich, weil der Halt des Verbinders (34) durch die Klammern (50, 52) einen gewissen Bewegungsspielraum zuläßt. Durch diese Maßnahme ist ein Verkanten von Kontaktleiste (32) und korrespondierender Anschlußbuchse innerhalb des Endgeräts ausgeschlossen.

Es sei ferner darauf hingewiesen, daß in dem Hauptkörper (12) eine schlüssellochförmige Aufhängeöffnung (62) ausgebildet ist, mittels welcher sich die Aufnahmevorrichtung in ihrem Transportzustand gemäß Figuren 2 und 3 an einer Wand über einen Nagel oder eine Schraube oder dergleichen aufhängen läßt.

Die Erfindung zeigt eine einfach ausgebildete Aufnahmevorrichtung, welche ohne eigene elektronische Komponenten - also in passiver Bauweise - einem mobilen elektronischen Endgerät, beispielsweise einem Mobilfunk-Endgerät, in ihrer Stützstellung einen statisch sicheren Halt bei ansprechendem optischen Erscheinungsbild bietet. Die erfindungsgemäße Aufnahmevorrichtung (10) läßt sich in der Transportstellung kleinvolumig transportieren. Sie ist einfach aus geläufigen Kunststoffmaterialien herzustellen, wie beispielsweise aus ABS, PC oder dergleichen.

### Bezugszeichenliste

- 10: Aufnahmevorrichtung
- 12: Hauptkörper
- 14: Aufnahmebereich
- 16: Stützelement
- 18: Längsschenkel
- 20: Längsschenkel
- 22: Querschenkel
- 24: Bolzen
- 26: Kanten
- 28: Kanten
- 30: Verbinderöffnung
- 32: Kontaktleiste
- 34: Verbinder
- 36: Verbinderkammer
- 38: Deckel
- 40: Schwenkgelenk
- 42: Begrenzungswände
- 44: Begrenzungswände
- 46: Rastzungen
- 48: Rastzungen
- 50: Positionierungsvorsprung
- 52: Halteklammer
- 54: Halteklammer
- 56: Kabel
- 58: Kabelarmierung
- 60: Kanalaustrittsöffnung
- 62: Aufhängeöffnung

## Patentansprüche

1. Aufnahmevorrichtung (10) für ein mobiles elektronisches Endgerät, insbesondere ein Kommunikations-Endgerät, umfassend einen Aufnahmebereich (14), in welchem das mobile elektronische Endgerät in einer vorbestimmten Aufnahmestellung aufnehmbar ist, wobei in dem Aufnahmebereich (14) eine Verbinderöffnung (30) vorgesehen ist, in welcher ein elektrischer Verbinder (34) eines Zusatzgeräts für das mobile elektronische Endgerät positioniert ist, und wobei bei Aufnahme eines mobilen elektronischen Endgeräts im Aufnahmebereich (14) der Aufnahmevorrichtung (10) der Verbinder (34) mit einem korrespondierenden Anschluss des mobilen elektronischen Endgeräts koppelbar oder gekoppelt ist, wobei weiterhin die Verbinderöffnung (30) einer Verbinderkammer (36) zugeordnet ist, in welcher der elektrische Verbinder (34) des Zusatzgeräts zumindest teilweise anordenbar ist und in der Verbinderkammer (36) Haltemittel (50, 52, 54) zum Fixieren des elektronischen Verbinders (34) vorgesehen sind,
**dadurch gekennzeichnet,**
**dass** die Verbinderöffnung (30) größer dimensioniert ist als der Verbinder (32, 34) und dass die Haltemittel (50, 52, 54) eine Bewegung des elektrischen Verbinders (34) in der Verbinderöffnung (30) zulassen.

2. Aufnahmevorrichtung (10) nach Anspruch 1,
**dadurch gekennzeichnet,**
**dass** der Aufnahmebereich (14) auf die Abmessungen des mobilen elektronischen Endgeräts abgestimmt ist.

3. Aufnahmevorrichtung (10) nach Anspruch 1 oder 2,
**dadurch gekennzeichnet,**
**dass** die Haltemittel (50, 52, 54) wenigstens eine Halteklammer (52, 54), zum Fixieren des elektronischen Verbinders (34) umfassen.

4. Aufnahmevorrichtung (10) nach Anspruch 3,
**dadurch gekennzeichnet,**
**dass** dassdie wenigstens eine Halteklammer (52, 54) eine Bewegung des elektrischen Verbinders (34) in der Verbinderöffnung (30) zulässt.

5. Aufnahmevorrichtung (10) nach einem der Ansprüche 1 bis 4,
**dadurch gekennzeichnet,**
**dass** die Verbinderkammer (36) wenigstens eine Kabelaustrittsöffnung (60₂, 60₃, 60₄) aufweist, durch welche ein von dem elektrischen Verbinder (34) ausgehendes Kabel (56) aus der Verbinderkammer (36) herausführbar ist.

6. Aufnahmevorrichtung (10) nach einem der Ansprüche 1 bis 5,
**dadurch gekennzeichnet,**
**dass** die Verbinderkammer (36) mit einem Deckel (38) wenigstens teilweise verschließbar ist.

7. Aufnahmevorrichtung (10) nach Anspruch 6,
**dadurch gekennzeichnet,**
**dass** der Deckel (38) über ein Gelenk (40), vorzugsweise ein Schwenkgelenk (40), an der Aufnahmevorrichtung (10) angebracht ist.

8. Aufnahmevorrichtung (10) nach Anspruch 6 oder 7,
**dadurch gekennzeichnet,**
**dass** der Deckel (38) an der Aufnahmevorrichtung (10) in einer Verschlussstellung festlegbar, vorzugsweise verrastbar, ist.

9. Aufnahmevorrichtung (10) nach einem der vorangehenden Ansprüche,
**gekennzeichnet durch**
wenigstens ein Stützelement (16), welches zum Stabilisieren der Aufnahmevorrichtung (10) aus einer Transportstellung in eine Stützstellung verlagerbar, vorzugsweise ausklappbar, ist.

10. Aufnahmevorrichtung (10) nach einem der vorangehenden Ansprüche,
**gekennzeichnet durch**
eine Aufhängeöffnung (62) zum Aufnehmen eines Aufhängemittels.

11. Set, umfassend eine Aufnahmevorrichtung (10) nach einem der Ansprüche 1 bis 10 sowie ein Zusatzgerät, wobei das Zusatzgerät ein Kabel (56) und einen endseitig an dem Kabel (56) angeordneten elektrischen Verbinder (34) umfasst, welcher in der Verbinderöffnung (30) der Aufnahmevorrichtung (30) positionierbar ist.

## Claims

1. Holder (10) for a mobile electronic terminal, particularly a communication terminal, comprising a receptacle area (14) in which the mobile electronic terminal can be held in a predetermined parked position, with a connector opening (30) in which an electrical connector (34) of an additional device for the mobile electronic terminal is positioned being provided in the receptacle area (14) and, whereby with a mobile electronic terminal held in the receptacle area (14) of the holder (10) the connection (34) is, or can be, connected to a corresponding connection of the mobile electronic terminal, whereby furthermore the connector opening (30) is assigned to a connector chamber (36) in which the electronic connector (34) of the additional device can at least partly be arranged and with retention means (50, 52, 54) for fixing the electronic connector (34) being provided in the connector chamber (36),
**characterised in that**
the connector opening (30) is larger than the connector (32, 34) and that the retention means (50, 52, 54) allows movement of the electrical connector (34) in the connector opening (30).

2. Holder (10) in accordance with claim 1,
**characterised in that**
the receptacle area (14) is matched to the dimensions of the mobile electronic terminal.

3. Holder (10) in accordance with claim 1 or 2,
**characterised in that**
the retention means (50, 52, 54) comprises at least one retaining clip (52, 54) for fixing the electronic connector (34).

4. Holder (10) in accordance with claim 3,
**characterised in that**
the at least one retaining clip (52, 54) permits movement of the electrical connector (34) in the connector opening (30).

5. Holder (10) in accordance with one of claims 1 to 4,
**characterised in that**
the connector chamber (36) has at least one cable outlet opening (60₂, 60₃ 60₄) through which a cable (56) from the electrical connector (34) can be led out of the connector chamber (36).

6. Holder (10) in accordance with one of claims 1 to 5,
**characterised in that**
the connector chamber (36) can be at least partially locked by a cover (38).

7. Holder (10) in accordance with claim 6,
**characterised in that**
the cover (38) is mounted by a hinge (40), preferably a swivel hinge (40), on the holder (10).

8. Holder (10) in accordance with claim 6 or 7,
**characterised in that**
the cover (38) can be located on the holder (10) in a locked position, preferably latching.

9. Holder (10) in accordance with one of the preceding claims,
**characterised by**
at least one supporting element (16) that can be moved, preferably folded out, from a transport position to a supporting position to stabilize the holder (10).

10. Holder (10) in accordance with one of the preceding claims,
**characterised by**
a hanging opening (62) to take a hanging means.

11. A set, comprising a holder (10) in accordance with one of claims 1 to 10, and an additional device, whereby the additional device comprises a cable (56) and an electrical connector (34) arranged at one end of the cable (56), that can be positioned in the connector opening (30) of the holder (30).

## Revendications

1. Socle de réception (10) pour un terminal électronique mobile, en particulier un terminal de communication, qui comprend une zone de réception (14) dans laquelle le terminal électronique mobile peut être reçu dans une position de réception prédéterminée, une ouverture (30) pour connecteur dans laquelle est disposé un connecteur électrique (34) d'un accessoire du terminal électronique mobile étant prévue dans la zone de réception (14), le connecteur (34) pouvant être accouplé ou étant accouplé à un raccordement correspondant du terminal électronique mobile lorsqu'un terminal électronique mobile est reçu dans la zone de réception (14) du socle de réception (10), l'ouverture (30) pour connecteur étant en outre associée à une chambre de connexion (36) dans laquelle le connecteur électrique (34) de l'accessoire peut être disposé au moins en partie, des moyens de maintien (50, 52, 54) pour la fixation du connecteur électronique (34) étant prévus dans la chambre de connexion (36),
**caractérisé en ce que**
les dimensions de l'ouverture (30) pour connecteur sont plus grandes que celles du connecteur (32, 34) et **en ce que** les moyens de maintien (50, 52, 54) permettent un déplacement du connecteur électrique (34) dans l'ouverture (30) pour connecteur.

2. Socle de réception (10) selon la revendication 1,
**caractérisé en ce que**
les dimensions de la zone de réception (14) sont accordées à celles du terminal électronique mobile.

3. Socle de réception (10) selon les revendications 1 ou 2,
**caractérisé en ce que**
les moyens de maintien (50, 52, 54) comprennent au moins une pince de maintien (52, 54) qui fixe le connecteur électronique (34).

4. Socle de réception (10) selon la revendication 3,
**caractérisé en ce que**
l'au moins une pince de maintien (52, 54) permet un déplacement du connecteur électrique (34) dans l'ouverture (30) pour connecteur.

5. Socle de réception (10) selon l'une des revendications 1 à 4,
**caractérisé en ce que**
la chambre de connexion (36) présente au moins une ouverture de sortie de câble (60₂, 60₃, 60₄) par laquelle un câble qui part du connecteur électrique (34) peut être sorti de la chambre de connexion (36).

6. Socle de réception (10) selon l'une des revendications 1 à 5,
**caractérisé en ce que**
la chambre de connexion (36) peut être fermée au moins en partie par un couvercle (38).

7. Socle de réception (10) selon la revendication 6,
**caractérisé en ce que**
le couvercle (38) est installé sur le socle de réception (10) par l'intermédiaire d'une articulation (40), de préférence d'une articulation à pivotement (40).

8. Socle de réception (10) selon les revendications 6 ou 7,
**caractérisé en ce que**
le couvercle (38) peut être fixé, de préférence par encliquetage, dans une position de fermeture sur le socle de réception (10).

9. Socle de réception (10) selon l'une des revendications précédentes,
**caractérisé par**
au moins un élément de soutien (16) qui peut être déplacé d'une position de transport en une position de soutien, de préférence par basculement, pour stabiliser le socle de réception (10).

10. Socle de réception (10) selon l'une des revendications précédentes,
**caractérisé par**
une ouverture (62) pour suspension pour la réception d'un moyen de suspension.

11. Ensemble qui comprend un socle de réception (10) selon l'une des revendications 1 à 10 ainsi qu'un accessoire, l'accessoire comprenant un câble (56) et un connecteur électrique (34) disposé à l'extrémité du câble (56) et qui peut être placé dans l'ouverture (30) pour connecteur du socle de réception (30).
